# EUROPEAN PATENT APPLICATION

(11) **EP 4 099 446 A1**
(43) Date of publication of application: **07.12.2022**
(21) Application number: 20917122.2
(22) Date of filing: 03.12.2020
(51) Int. Cl.: H01M 4/525, C01G 53/00, H01M 4/36, H01M 4/505

(54) **POSITIVE ELECTRODE ACTIVE MATERIAL FOR NONAQUEOUS ELECTROLYTE SECONDARY BATTERIES, NONAQUEOUS ELECTROLYTE SECONDARY BATTERY, AND METHOD FOR PRODUCING POSITIVE ELECTRODE ACTIVE MATERIAL FOR NONAQUEOUS ELECTROLYTE SECONDARY BATTERIES**

(30) Priority: 31.01.2020 JP 2020014957
(71) Applicant: Panasonic Intellectual Property Management Co., Ltd., Osaka-shi, Osaka 540-6207 (JP)
(72) Inventor: FUKAMICHI, Noriko, Osaka-shi, Osaka 540-6207 (JP); KANAI, Toshinobu, Osaka-shi, Osaka 540-6207 (JP); OGASAWARA, Takeshi, Osaka-shi, Osaka 540-6207 (JP)
(74) Representative: Novagraaf International SA
(86) International application number: PCT/JP2020/045042
(87) International publication number: WO 2021/153001

(57) **Abstract**

This positive electrode active material for nonaqueous electrolyte secondary batteries contains a lithium transition metal composite oxide which contains 80% by mole or more of Ni relative to the total number of moles of the metal elements excluding Li, and at least one of Mn and Al, while additionally containing at least one metal element that is selected from among Co, W, Mg, Mo, Nb, Ti, Si, Zr, Fe, Zn, Er, K, Pr, Ca, Ba, Sc, Rb, Ga, In, Sn and Sr, wherein: the total amount of Mn and Al is 5% by mole or more relative to the total number of moles of the metal elements excluding Li; and with respect to a filtrate of a suspension, which has been prepared by adding 250 mg of the positive electrode active material to 10 mL of a 17.5 mass% aqueous solution of hydrochloric acid, dissolving the positive electrode active material therein by 2-hour heating at 90°C, and subsequently diluting the solution to 50 mL, the elution amount of S in the filtrate as determined by inductively coupled plasma mass spectrometry is 0.002 mmol or more.

## Description

### TECHNICAL FIELD

The present disclosure relates to a positive electrode active material for non-aqueous electrolyte secondary battery, a non-aqueous electrolyte secondary battery using the positive electrode active material, and a method for producing the positive electrode active material.

### BACKGROUND

As a positive electrode active material for a non-aqueous electrolyte secondary battery such as a lithium ion battery, a lithium transition metal composite oxide is generally used. In recent years, as a high-capacity positive electrode active material, a lithium transition metal composite oxide having a high Ni content ratio is widely employed. For example, Patent Literature 1 discloses a method for producing a positive electrode active material, the method in which, together with tungsten oxide, at least one selected from a sulfuric acid compound, a nitric acid compound, a boric acid compound, and a phosphoric acid compound is adhered to the surface of particles of a lithium transition metal composite oxide containing Ni, and those composite particles are heat-treated in an oxygen atmosphere.

### CITATION LIST

### PATENT LITERATURE

PATENT LITERATURE 1: Japanese Unexamined Patent Application Publication No. 2010-040383

### SUMMARY

In a non-aqueous electrolyte secondary battery such as a lithium ion battery, it is an important issue to improve the charge/discharge cycle characteristic. In conventional techniques including the technique disclosed in Patent Literature 1, there is still room for improvement in battery cycle characteristic. According to the production method disclosed in Patent Literature 1, when the Ni content ratio in the positive electrode active material is high, cation mixing is likely to occur and the initial capacity tends to become decreased.

A positive electrode active material for non-aqueous electrolyte secondary battery according to one aspect of the present disclosure is a positive electrode active material including a lithium transition metal composite oxide which contains Ni in an amount of 80 mol% or more relative to the total number of moles of metal elements excluding Li, and at least one of Mn or Al, while also containing at least one metal element selected from Co, W, Mg, Mo, Nb, Ti, Si, Zr, Fe, Zn, Er, K, Pr, Ca, Ba, Sc, Rb, Ga, In, Sn, and Sr. The total amount of Mn and Al is 5 mol% or more relative to the total number of moles of metal elements excluding Li. Regarding a filtrate of a suspension obtained by having 250 mg of the positive electrode active material added to 10 mL of a 17.5 mass% aqueous solution of hydrochloric acid, dissolved by heating at 90 °C for 2 hours, and diluted to 50 mL, the elution amount of S in the filtrate as determined by inductively coupled plasma mass spectrometry is 0.002 mmol or more.

A non-aqueous electrolyte secondary battery according to one aspect of the present disclosure has a positive electrode including the above-described positive electrode active material for non-aqueous electrolyte secondary battery, a negative electrode, and a non-aqueous electrolyte.

A method for producing the positive electrode active material for non-aqueous electrolyte secondary battery according to one aspect of the present disclosure includes: a step of obtaining a composite oxide by performing oxidizing roasting of a hydroxide obtained by a crystallization method and containing at least Ni; a step of obtaining a lithium transition metal composite oxide by mixing the composite oxide with a lithium compound and firing the mixed particles; and a step of washing the lithium transition metal composite oxide with water, then mixing this composite oxide with at least one selected from cobalt sulfate, magnesium sulfate, titanium sulfate, zirconium sulfate, iron sulfate, zinc sulfate, erbium sulfate, potassium sulfate, praseodymium sulfate, calcium sulfate, barium sulfate, scandium sulfate, rubidium sulfate, gallium sulfate, indium sulfate, tin sulfate, and strontium sulfate, and heat-treating this mixture at a temperature of 150 to 280 °C in a vacuum condition.

According to the positive electrode active material according to the present disclosure, it is possible to provide a non-aqueous electrolyte secondary battery having an excellent charge/discharge cycle characteristic. That is, in a non-aqueous electrolyte secondary battery including a positive electrode active material containing Ni in an amount of 80 mol% or more relative to the total number of moles of metal elements excluding Li, the charge/discharge cycle characteristic can be improved.

### BRIEF DESCRIPTION OF DRAWINGS

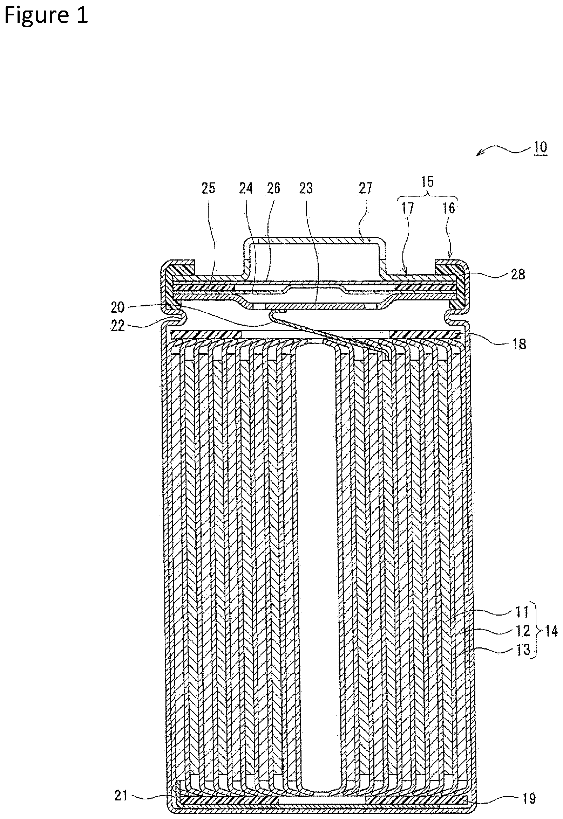

FIG. 1 is a cross-sectional view of a non-aqueous electrolyte secondary battery according to an example embodiment.

### DESCRIPTION OF EMBODIMENTS

As mentioned above, in a non-aqueous electrolyte secondary battery such as a lithium ion battery, it is an important issue to improve the charge/discharge cycle characteristic. As a result of conducting diligent studies to improve the cycle characteristic by focusing on the positive electrode active material, the present inventors discovered that the battery cycle characteristic is specifically improved in cases where a predetermined amount of S is contained in a filtrate of a suspension obtained by dispersing the positive electrode active material in a predetermined aqueous solution of hydrochloric acid. It was found that this advantageous effect is exhibited when the total content of Mn and Al in the positive electrode active material is 5 mol% or more. Although the detailed mechanism of the improvement in cycle characteristic is not clear, it is considered that S, which is the eluted component, is derived from SO₄, and that a compound containing SO4 functions as a protective layer on the surface of particles of the lithium transition metal composite oxide to suppress decomposition reaction of the electrolyte solution at the particle surface, so that the cycle characteristic is improved. When a predetermined amount of S is present in the filtrate, it is assumed that this function as a protective layer is sufficiently exhibited.

Example embodiments of a positive electrode active material for non-aqueous electrolyte secondary battery, a non-aqueous electrolyte secondary battery using the positive electrode active material, and a method for producing the positive electrode active material, all according to the present disclosure, will now be described in detail by reference to the drawing. Although a cylindrical battery in which a spiral-type electrode assembly 14 is housed in a cylindrical battery housing is described below as an example, the electrode assembly is not limited to a spiral type, and may be a laminate type formed by alternately laminating a plurality of positive electrodes and a plurality of negative electrodes one by one via a separator. Further, the non-aqueous electrolyte secondary battery according to the present disclosure may be a rectangular battery having a rectangular metal housing, a coin-shaped battery having a coin-shaped metal housing, or the like, or may alternatively be a laminate battery having an outer casing composed of a laminate sheet including a metal layer and a resin layer.

FIG. 1 is a cross-sectional view of a non-aqueous electrolyte secondary battery 10 according to an example embodiment. As shown for example in FIG. 1, the non-aqueous electrolyte secondary battery 10 comprises an electrode assembly 14, an electrolyte, and a battery housing 15 that houses the electrode assembly 14 and the non-aqueous electrolyte. The electrode assembly 14 includes a positive electrode 11, a negative electrode 12, and a separator 13, and has a spiral structure in which the positive electrode 11 and the negative electrode 12 are wound with the separator 13 disposed between these electrodes. The battery housing 15 is composed of a bottomed cylindrical outer can 16 and a sealing assembly 17 that closes the opening of the outer can 16.

The non-aqueous electrolyte contains a non-aqueous solvent and an electrolyte salt dissolved in the non-aqueous solvent. As the non-aqueous solvent, for example, esters, ethers, nitriles, amides, and a mixed solvent containing two or more of the foregoing may be used. The non-aqueous solvent may contain a halogen-substituted product obtained by substituting at least a part of hydrogens in the above solvents with halogen atoms such as fluorine. The non-aqueous electrolyte is not limited to a liquid electrolyte, and may be a solid electrolyte. As the electrolyte salt, for example, a lithium salt such as LiPF6 is used.

The non-aqueous electrolyte secondary battery 10 comprises insulating plates 18, 19 respectively arranged above and below the electrode assembly 14. In the example shown in FIG. 1, a positive electrode lead 20 attached to the positive electrode 11 extends through a through hole in the insulating plate 18 and toward the sealing assembly 17, while a negative electrode lead 21 attached to the negative electrode 12 extends outside the insulating plate 19 and toward the bottom portion of the outer can 16. The positive electrode lead 20 is connected to the lower surface of a bottom plate 23 of the sealing assembly 17 by welding or the like, and a cap 27, which is a top plate of the sealing assembly 17 electrically connected to the bottom plate 23, serves as the positive electrode terminal. The negative electrode lead 21 is connected to the inner surface of the bottom portion of the outer can 16 by welding or the like, and the outer can 16 serves as the negative electrode terminal.

The outer can 16 is, for example, a bottomed cylindrical metal container. A gasket 28 is provided between the outer can 16 and the sealing assembly 17 to ensure airtightness inside the battery. For example, the outer can 16 has formed thereon a grooved portion 22, where a part of a side surface portion protrudes inward and supports the sealing assembly 17. The grooved portion 22 is preferably formed in an annular shape along the circumferential direction of the outer can 16, and supports the sealing assembly 17 on its upper surface.

The sealing assembly 17 has a structure obtained by laminating, in order from the electrode assembly 14 side, the bottom plate 23, a lower valve member 24, an insulating member 25, an upper valve member 26, and the cap 27. Each of the members constituting the sealing assembly 17 has, for example, a disk shape or a ring shape, and the respective members except the insulating member 25 are electrically connected to each other. The lower valve member 24 and the upper valve member 26 are connected to each other at their central portions, and the insulating member 25 is interposed between peripheral edge portions of these valve members. When the internal pressure of the battery increases due to abnormal heat generation, the lower valve member 24 deforms and ruptures in a manner pushing up the upper valve member 26 toward the cap 27, and the current path between the lower valve member 24 and the upper valve member 26 is cut off. When the internal pressure increases further, the upper valve member 26 ruptures, and gas is discharged from an opening in the cap 27.

A detailed description will now be given regarding the positive electrode 11, the negative electrode 12, and the separator 13, which constitute the electrode assembly 14, and in particular regarding a positive electrode active material included in the positive electrode 11.

### [Positive Electrode]

The positive electrode 11 comprises a positive electrode current collector and a positive electrode mixture layer formed on at least one of the surfaces of this current collector. As the positive electrode current collector, it is possible to use a foil of a metal stable in the potential range of the positive electrode 11 such as aluminum or an aluminum alloy, a film having such a metal disposed on its surface layer, or the like. The positive electrode mixture layer contains a positive electrode active material, a conductive material, and a binder, and is preferably formed on both surfaces of the positive electrode current collector. The positive electrode 11 may be produced by applying a positive electrode mixture slurry containing the positive electrode active material, the conductive material, the binder, and the like onto the positive electrode current collector, and, after drying the applied coating, compressing the applied coating to form positive electrode mixture layers on both surfaces of the positive electrode current collector.

Examples of the conductive material contained in the positive electrode mixture layer include carbon materials such as carbon black, acetylene black, Ketjen black, and graphite. Examples of the binder contained in the positive electrode mixture layer include fluororesins such as polytetrafluoroethylene (PTFE) and polyvinylidene fluoride (PVdF), polyacrylonitrile (PAN), polyimides, acrylic resins, and polyolefins. These resins may be used in combination with cellulose derivatives such as carboxymethyl cellulose (CMC) or salts thereof, polyethylene oxide (PEO), or the like.

The positive electrode active material contains Ni in an amount of 80 mol% or more relative to the total number of moles of metal elements excluding Li, and at least one of Mn or Al, while also containing at least one metal element selected from Co, W, Mg, Mo, Nb, Ti, Si, Zr, Fe, Zn, Er, K, Pr, Ca, Ba, Sc, Rb, Ga, In, Sn, and Sr. Here, the total amount of Mn and Al is 5 mol% or more relative to the total number of moles of metal elements excluding Li. The positive electrode active material contains this composite oxide as the main component, and the content of this composite oxide in the positive electrode active material is preferably 90 mass% or more, and may substantially be 100 mass%. The positive electrode active material may contain lithium transition metal composite oxides other than the above-described composite oxide, or any other compounds, so long as the advantageous effects of the present disclosure are not impaired. Hereinafter, unless otherwise specified, "lithium transition metal composite oxide" means the above-described composite oxide having a Ni content of 80 mol% or more.

The lithium transition metal composite oxide may contain Ni in an amount of 85 mol% or more, or Ni in an amount of 90 mol% or more, relative to the total number of moles of metal elements other than Li. The Ni content is, for example, 80 to 95 mol%. An example of a suitable lithium transition metal composite oxide is a composite oxide represented by general formula LiₐNi_{(1-x-y)}M1ₓM2_{y}O₂ (where 0.97 ≤ a ≤ 1.2, 0.05 ≤ x ≤ 0.2, 0 ≤ y ≤ 0.1, 0.05 ≤ x+y ≤ 0.2, M1 is at least one of Al or Mn, and M2 is at least one metal element selected from Co, W, Mg, Mo, Nb, Ti, Si, Zr, Fe, Zn, Er, K, Pr, Ca, Ba, Sc, Rb, Ga, In, Sn, and Sr). The lithium transition metal composite oxide may contain elements other than Li, Ni, the metal element M1, or the metal element M2, such as Na, V, In, Y, and Cr, so long as the advantageous effects of the present disclosure are not impaired.

Generally, the lithium transition metal composite oxide is secondary particles formed by agglomeration of primary particles. The volume-based median diameter of the lithium transition metal composite oxide (secondary particles) is not particularly limited, but is preferably 2 µm to 20 µm, and more preferably 6 µm to 15 µm. A volume-based median diameter of a composite oxide is a particle size at which, in a particle size distribution measured using a laser diffraction/scattering type particle size distribution measuring device, the integrated volume value reaches 50 %, and this particle size is also referred to as the 50% particle size (D50). The particle size of the primary particles constituting the secondary particles is, for example, 0.05 µm to 2 µm. The particle size of the primary particles is measured as the diameter of a circumscribed circle in a particle image observed by a scanning electron microscope (SEM).

The positive electrode active material containing the lithium transition metal composite oxide is such that, regarding a filtrate of a suspension obtained by adding 250 mg of the positive electrode active material to 10 mL of a 17.5 mass% aqueous solution of hydrochloric acid, dissolving the mixture by heating at 90 °C for 2 hours, and then diluting the mixture to 50 mL, the elution amount of S in the filtrate as determined by inductively coupled plasma mass spectrometry (ICP-MS) is 0.002 mmol% or more. When the elution amount of S does not satisfy this condition, a good cycle characteristic cannot be obtained as shown in the Examples described later. In the filtrate, sulfate ions (SO₄²⁻) are present, and Li ions may not be present.

A specific method for quantifying the eluted components from the positive electrode active material is as described below.
(1) Add 250 mg of the positive electrode active material to 10 mL of a 17.5 mass% aqueous solution of hydrochloric acid, and dissolve the mixture by heating at 90 °C for 2 hours to prepare a suspension having the active material dispersed in the aqueous solution. The temperature at the time of preparing the suspension may be approximately 90 °C, and may for example be 90 °C ± 5 °C.
(2) Filter the suspension (i.e., subject the suspension to solid-liquid separation) to obtain a filtrate containing eluted components such as S. Subsequently, dilute the filtrate to 50 mL with distilled water.
(3) Quantify the eluted components in the filtrate using an ICP-MS apparatus.

It is considered that S in the filtrate is an eluted component derived from a compound containing SO4 (hereinafter, may be referred to as "SO₄-containing compound"), and that the positive electrode active material includes the SO₄-containing compound. The SO₄-containing compound is, for example, present on the particle surface of the lithium transition metal composite oxide. The SO₄-containing compound may be present on the inside of the secondary particles, that is, on the surface of the primary particles that does not appear at the surface of the secondary particles (i.e., the interface between the primary particles), but is preferably present in a larger amount on the surface of the secondary particles than on the inside the secondary particles.

Preferably, the SO₄-containing compound is evenly present at a uniform density over the entire surface of the particles of the lithium transition metal composite oxide. It is assumed that the SO₄-containing compound present on the particle surface of the lithium transition metal composite oxide functions as a protective layer and suppresses decomposition reaction of the electrolyte solution at the particle surface. When S is contained in the filtrate at a concentration of 0.002 mmol or more, it is considered that the function as a protective layer provided by the SO₄-containing compound is sufficiently exhibited to improve the battery cycle characteristic.

The elution amount of S contained in the filtrate is preferably 0.003 mmol or more. The upper limit of the elution amount of S is not particularly limited from the perspective of cycle characteristic, but is preferably 0.24 mmol in consideration of battery capacity, output, and the like. The elution amount of S is, for example, 0.003 to 0.03 mmol.

The elution amount of metal element M (i.e., at least one metal element selected from Co, W, Mg, Ti, Zr, Fe, Zn, Er, K, Pr, Ca, Ba, Sc, Rb, Ga, In, Sn, and Sr) contained in the filtrate is preferably 0.0001 mmol or more. The upper limit of the elution amount of the metal element M is not particularly limited from the perspective of cycle characteristic, but is preferably 0.3 mmol in consideration of battery capacity, output, and the like.

The SO₄-containing compound present on the particle surface of the lithium transition metal composite oxide is assumed to be at least one selected from lithium sulfate, cobalt sulfate, magnesium sulfate, titanium sulfate, zirconium sulfate, iron sulfate, zinc sulfate, erbium sulfate, potassium sulfate, praseodymium sulfate, calcium sulfate, barium sulfate, scandium sulfate, rubidium sulfate, gallium sulfate, indium sulfate, tin sulfate, and strontium sulfate. For example, on the particle surface of the lithium transition metal composite oxide, at least lithium sulfate is present. Furthermore, on the particle surface of the lithium transition metal composite oxide, a hydroxide or oxide of Co, Mg, Ti, Zr, Fe, Zn, Er, K, Pr, Ca, Ba, Sc, Rb, Ga, In, Sn, Sr, or the like may be present.

Li contained in the positive electrode active material is preferably 7.4 mass% or less, more preferably 7.3 mass% or less, and particularly preferably 7.1 mass% or less. The amount of Li may be 7.0 mass% or less, but in that case, the charge capacity may be decreased or the reaction resistance may be increased. When the amount of Li exceeds 7.4 mass%, the positive electrode mixture slurry used for forming the positive electrode mixture layer gels, and it becomes difficult to form a high-quality positive electrode mixture layer. By producing the positive electrode active material by adding a predetermined sulfuric acid compound to the lithium transition metal composite oxide washed with water and then heat-treating the mixture at a low temperature in a vacuum state, occurrence of cation mixing can be suppressed and the elution amount of Li can be reduced.

The particle surface of the lithium transition metal composite oxide may have adhered thereto, in addition to the SO₄-containing compound, at least one of tungsten oxide (WO3) or lithium tungstate generated by reaction of excess Li of the lithium transition metal composite oxide with WO₃. Preferably, WO3 and lithium tungstate are adhered evenly at a uniform density to the entire surface of the particles of the lithium transition metal composite oxide, similarly to the SO₄-containing compound. When WO3 and lithium tungstate are present on the particle surface, the battery cycle characteristic is further improved by its synergistic effect with the SO₄-containing compound. The content of WO₃ and lithium tungstate is preferably 0.05 to 0.5 mol%, in terms of W element, relative to the total number of moles of metal elements excluding Li in the lithium transition metal composite oxide, and is particularly preferably 0.05 to 0.2 mol% in order to minimize a decrease in charge capacity.

It is possible to observe the state of WO₃ and lithium tungstate being adhered to the particle surface of the lithium transition metal composite oxide and to quantify their content using an SEM and an ICP emission spectrophotometer. On the particle surface of the lithium transition metal composite oxide, inorganic particles other than the SO₄-containing compound, WO3, or lithium tungstate may be present, such as phosphorus compounds, boron compounds, and rare earth compounds.

The positive electrode active material containing the lithium transition metal composite oxide is such that, regarding a filtrate obtained by adding 1 g of the positive electrode active material to a mixed solution of 100 mL of pure water, 1 mL of a 35 mass% aqueous solution of hydrochloric acid, 0.05 mL of 46 mass% hydrofluoric acid, and 0.05 mL of 64 mass% nitric acid, and after stirring for 5 minutes, filtering this mixed solution, the ratio of the partial elution amount of the metal element M contained in the filtrate as determined by ICP-MS to the total elution amount of the metal element M as determined in the same manner when 1 g of the positive electrode active material is completely dissolved (i.e., (partial elution amount / total elution amount) × 100) is preferably 50 % or more, and more preferably 55 % or more. The partial elution amount measured by this method indicates the abundance of the metal element M on the surface of the positive electrode active material and its vicinity (the same applies to S). When the elution amount ratio of the metal element M satisfies the above-noted condition, a superior cycle characteristic is exhibited as compared to cases where the condition is not satisfied.

The total elution amount from the positive electrode active material is determined by ICP-MS in a mixture obtained by adding 200 mg of the positive electrode active material to a mixed solution of 5 mL of 35 mass% hydrochloric acid, 2.5 mL of 46 mass% hydrofluoric acid, and 2.5 mL of 64 mass% nitric acid, heating the mixed solution at about 90 °C for 2 hours, and then adding pure water to dilute the mixed solution to 100 mL.

The above-described positive electrode active material can be produced by a production method including the following steps.
(1) A step of obtaining a composite oxide by performing oxidizing roasting of a hydroxide obtained by a crystallization method and containing at least Ni.
(2) A step of obtaining a lithium transition metal composite oxide by mixing the composite oxide with a lithium compound and firing the mixed particles.
(3) A step of washing the lithium transition metal composite oxide with water, then mixing this composite oxide with at least one selected from cobalt sulfate, magnesium sulfate, titanium sulfate, zirconium sulfate, iron sulfate, zinc sulfate, erbium sulfate, potassium sulfate, praseodymium sulfate, calcium sulfate, barium sulfate, scandium sulfate, rubidium sulfate, gallium sulfate, indium sulfate, tin sulfate, and strontium sulfate, and heat-treating this mixture at a temperature of 150 to 280 °C in a vacuum condition.

In the step (1), for example, a hydroxide containing Ni, Co, and Al is obtained by a coprecipitation method using nickel sulfate, cobalt sulfate, and aluminum sulfate as raw materials. By firing (i.e., performing oxidizing roasting of) this hydroxide in atmospheric air at 500 to 700 °C for 1 to 3 hours, a composite oxide containing Ni, Co, and Al is obtained. The composite oxide obtained in the step (1) contains at least Ni and at least one of Al or Mn, and preferably further contains Co. Further, the composite oxide obtained in the step (1) may contain Mo, Nb, and Si.

In the step (2), a mixture of the composite oxide obtained in the step (1) and a lithium compound is fired at a temperature exceeding 700 °C. The preferred range of the firing temperature is 700 to 900 °C. The firing is preferably performed in an oxygen stream. In step (2), the lithium compound is generally used in an amount in excess of an amount according to the stoichiometric ratio of the intended product. As the lithium compound, for example, lithium carbonate, lithium hydroxide, lithium nitrate, and lithium sulfate may be used. Among these, lithium carbonate and lithium hydroxide are preferable. Further, before proceeding to the step (3), the lithium transition metal composite oxide is preferably crushed and classified to adjust the D50 to within a predetermined range.

In the step (3), the lithium transition metal composite oxide obtained in the step (2) is washed with water and subjected to solid-liquid separation, and a powder of the composite oxide having a water content of, for example, 3 to 8 mass% is obtained. To this powder of the composite oxide, at least one selected from cobalt sulfate, magnesium sulfate, titanium sulfate, zirconium sulfate, iron sulfate, zinc sulfate, erbium sulfate, potassium sulfate, praseodymium sulfate, calcium sulfate, barium sulfate, scandium sulfate, rubidium sulfate, gallium sulfate, indium sulfate, tin sulfate, and strontium sulfate is added and mixed. Here, these sulfuric acid compounds may be hydrates. Further, the amount of these sulfuric acid compounds added is preferably 0.01 to 0.5 mol%, in terms of metal element of Co, Mg, Ti, Zr, Fe, Zn, Er, K, Pr, Ca, Ba, Sc, Rb, Ga, In, Sn, or Sr, relative to the total number of moles of metal elements excluding Li in the lithium transition metal composite oxide. At this time, tungsten oxide may be added together with the sulfuric acid compound.

The mixed powder of the lithium transition metal composite oxide and the sulfuric acid compound is heat-treated at a low temperature of 150 to 280 °C in a vacuum. The heat treatment temperature is more preferably 150 to 210 °C. By heat-treating the mixed powder at a low temperature and in a vacuum state, it is possible to obtain a positive electrode active material in which occurrence of cation mixing is suppressed and a protective layer of an SO₄-containing compound is formed on the particle surface of the lithium transition metal composite oxide. If the heat treatment of the step (3) is performed in an oxygen atmosphere (or in atmospheric air), cation mixing would occur and the initial capacity would be decreased.

In a case where nickel sulfate, cobalt sulfate, and aluminum sulfate are used as the raw materials for the hydroxide in the step (1) and titanium sulfate is added in the step (3), the metal elements contained in the positive electrode active material are, for example, Li, Ni, Co, Al, and Ti. In that case, regarding a filtrate of a suspension obtained by adding 250 mg of the positive electrode active material to 10 mL of a 17.5 mass% aqueous solution of hydrochloric acid, dissolving the mixture by heating at 90 °C for 2 hours, and then diluting the mixture to 50 mL, the elution amount of S in the filtrate as determined by ICP-MS is 0.002 mmol or more. The non-aqueous electrolyte secondary battery using this positive electrode active material exhibits an excellent cycle characteristic.

### [Negative Electrode]

The negative electrode 12 comprises a negative electrode current collector and a negative electrode mixture layer formed on at least one of the surfaces of this current collector. As the negative electrode current collector, it is possible to use a foil of a metal stable in the potential range of the negative electrode 12 such as copper or a copper alloy, a film having such a metal disposed on its surface layer, or the like. Th negative electrode mixture layer contains a negative electrode active material and a binder, and is preferably formed on both surfaces of the negative electrode current collector. The negative electrode 12 may be produced by applying a negative electrode mixture slurry containing the negative electrode active material, the binder, and the like onto the negative electrode current collector, and, after drying the applied coating, rolling the applied coating to form negative electrode mixture layers on both surfaces of the negative electrode current collector.

The negative electrode active material is not particularly limited so long as it can reversibly occlude and release lithium ions. As the negative electrode active material, a carbon material such as graphite is generally used. The graphite may be either natural graphite such as scaly graphite, massive graphite, and earthy graphite, or artificial graphite such as massive artificial graphite and graphitized mesophase carbon microbeads. Further, as the negative electrode active material, a metal that alloys with Li such as Si and Sn, a metal compound containing Si, Sn, or the like, a lithium-titanium composite oxide, and the like may be used. Examples of the compound containing Si include a Si-containing compound represented by SiOₓ (where 0.5 ≤ x ≤ 1.5).

As the binder contained in the negative electrode mixture layer, fluororesins such as PTFE and PVdF, PAN, polyimides, acrylic resins, polyolefins, and the like may be used as in the positive electrode 11, but styrene-butadiene rubber (SBR) is preferably used. Further, the negative electrode mixture layer may contain CMC or a salt thereof, polyacrylic acid (PAA) or a salt thereof, PVA, and the like. For example, the negative electrode mixture layer includes SBR, as well as CMC or a salt thereof.

### [Separator]

As the separator 13, a porous sheet having ion permeability and insulating property is used. Specific examples of the porous sheet include a microporous thin film, a woven fabric, and a non-woven fabric. As the material for the separator 13, polyolefins such as polyethylene and polypropylene, cellulose, and the like are preferred. The separator 13 may have a single-layer structure or a laminated structure. Further, on the surface of the separator 13, there may be provided a highly heat-resistant resin layer made of aramid resin or the like, or a filler layer containing an inorganic compound filler.

### EXAMPLES

While the present disclosure will now be described further in detail with reference to Examples, the present disclosure is not limited to these Examples.

### <Example 1>

### [Preparation of Positive Electrode Active Material]

A nickel-cobalt-aluminum composite hydroxide obtained by a coprecipitation method was subjected to oxidizing roasting to synthesize a composite oxide represented by Ni_{0.85}Co_{0.10}Al_{0.05}O₂. This composite oxide and lithium hydroxide were mixed so that the molar ratio of the metal elements in the composite oxide to Li in the lithium hydroxide was 1:1.015. After firing this mixture at 745 °C for 6 hours under an oxygen stream, the fired product was crushed and classified to obtain a lithium transition metal composite oxide having a D50 of 12 µm. The lithium transition metal composite oxide was secondary particles formed by agglomeration of primary particles.

1250 g of the lithium transition metal composite oxide was placed in 1 L of water, washed with water, and then subjected to solid-liquid separation to obtain a powder of the composite oxide having a water content of 3 to 8 mass%. This composite oxide powder and titanium sulfate were mixed, and the mixed powder was heat-treated at 180 °C for 3 hours under a vacuum condition to obtain a positive electrode active material. Here, the amount of titanium sulfate added was 0.1 mol%, in terms of Ti element, relative to the total number of moles of metal elements excluding Li in the lithium transition metal composite oxide.

The amounts of S and the metal element M (Ti) eluted from the positive electrode active material were quantified by the following procedure. The measurement results are shown in Table 1 (the same was performed for subsequent Examples and Comparative Examples).
(1) Add 250 mg of the positive electrode active material to 10 mL of a 17.5 mass% aqueous solution of hydrochloric acid, and dissolve the mixture by heating at 90 °C for 2 hours to prepare a suspension having the active material dispersed in the aqueous solution.
(2) Filter the suspension, and dilute the suspension with distilled water to 50 mL to obtain a filtrate containing S and M.
(3) Using an ICP-MS apparatus (SPS3100 manufactured by Hitachi High-Tech Science Corp.), quantify S and M in the filtrate.

### [Evaluation of Elution Amount Ratios of Metal Element M and S]

The partial elution amount and the total elution amount of each of the metal element M and S in the obtained positive electrode active material were determined by the method described above, and the ratios ((partial elution amount / total elution amount) × 100) were calculated respectively. The measurement results are shown in Table 1 (the same was performed for subsequent Examples and Comparative Examples).

### [Production of Positive Electrode]

A positive electrode mixture slurry using N-methyl-2-pyrrolidone (NMP) as the dispersion medium was prepared by mixing the above-described positive electrode active material, acetylene black, and polyvinylidene fluoride (PVdF) at a solid content mass ratio of 100:0.75:0.6. Next, the positive electrode mixture slurry was applied to both surfaces of a positive electrode current collector made of aluminum foil, and after drying and compressing the applied coating, the product was cut into a predetermined electrode size. A positive electrode having positive electrode mixture layers formed on both surfaces of the positive electrode current collector was thereby produced.

### [Production of Negative Electrode]

As the negative electrode active material, a mixture obtained by mixing graphite and a Si-containing compound represented by SiOₓ (where x = 1.0) at a mass ratio of 96:4 was used. A negative electrode mixture slurry using water as the dispersion medium was prepared by mixing this negative electrode active material, a dispersion of styrene-butadiene rubber (SBR), and sodium carboxymethyl cellulose (CMC-Na) at a solid content mass ratio of 98:1:1. Next, the negative electrode mixture slurry was applied to both surfaces of a negative electrode current collector made of copper foil, and after drying and compressing the applied coating, the product was cut into a predetermined electrode size. A negative electrode having negative electrode mixture layers formed on both surfaces of the negative electrode current collector was thereby produced.

### [Preparation of Non-Aqueous Electrolyte]

Ethylene carbonate (EC), methyl ethyl carbonate (EMC), and dimethyl carbonate (DMC) were mixed at a volume ratio of 20:5:75. A non-aqueous electrolyte was prepared by dissolving LiPF6 into this mixed solvent at a concentration of 1.2 mol/L.

### [Production of Battery]

An aluminum lead was attached to the above-described positive electrode, and a nickel lead was attached to the above-described negative electrode. A spiral-type electrode assembly was produced by spirally winding the positive electrode and the negative electrode with a polyethylene separator disposed between these electrodes. This electrode assembly was housed in a bottomed cylindrical battery housing body having an outer diameter of 18.2 mm and a height of 65 mm, and after injecting the above-described non-aqueous electrolyte therein, the opening of the battery housing body was sealed with a gasket and a sealing assembly. A cylindrical non-aqueous electrolyte secondary battery was thereby produced.

### <Comparative Example 1>

A positive electrode active material and a battery were obtained in the same manner as in Example 1 except that, in preparing the positive electrode active material, titanium sulfate was not added.

### [Evaluation of Cycle Characteristic (Capacity Retention Rate)]

The battery of each of Example 1 and Comparative Example 1 was charged at 25 °C with a constant current of 0.3 It until the battery voltage reached 4.2 V, and then charged with a constant voltage of 4.2 V until the current reached the final current of 70 mA. Subsequently, the battery was discharged with a constant current of 0.5 It until the battery voltage reached 2.5 V. This charge/discharge cycle was repeated for 100 cycles, and the ratio of the discharge capacity in the 100th cycle to the discharge capacity in the first cycle (i.e., the capacity retention rate) was determined. Table 1 shows the capacity retention rate of the battery of Example 1 expressed as a value relative to the capacity retention rate of the battery of Comparative Example 1, which is assumed to be 100.

**[Table 1]**

| | Composite Oxide (Ni/Co/ Al) | Additive | Amount Added (mol%) | S Elution Amount (mmol) | M Elution Amount (mmol) | Capacity Retention Rate | S Elution Amount Ratio | M Elution Amount Ratio |
|---|---|---|---|---|---|---|---|---|
| Example 1 | 85/10/5 | Titanium Sulfate | 0.1 | 0.0121 | 0.0063 | 102 | 85 | 81 |
| Comparative Example 1 | 85/10/5 | - | - | 0.0008 | 0 | 100 | 1 | 0 |

### <Example 2>

A positive electrode active material and a battery were obtained in the same manner as in Example 1 except that, in preparing the positive electrode active material, a composite oxide represented by Ni_{0.85}Co_{0.05}Al_{0.10}O₂ was used.

### <Comparative Example 2>

A positive electrode active material and a battery were obtained in the same manner as in Comparative Example 1 except that, in preparing the positive electrode active material, a composite oxide represented by Ni_{0.85}Co_{0.05}Al_{0.10}O₂ was used.

Cycle characteristic evaluation was performed using the batteries obtained in Example 2 and Comparative Example 2. Table 2 shows the capacity retention rate of the battery of Example 2 expressed as a value relative to the capacity retention rate of the battery of Comparative Example 2, which is assumed to be 100.

**[Table 2]**

| | Composite Oxide (Ni/Co/ Al) | Additive | Amount Added (mol%) | S Elution Amount (mmol) | M Elution Amount (mmol) | Capacity Retention Rate | S Elution Amount Ratio | M Elution Amount Ratio |
|---|---|---|---|---|---|---|---|---|
| Example 2 | 85/5/10 | Titanium Sulfate | 0.1 | 0.0115 | 0.0060 | 102 | 70 | 85 |
| Comparative Example 2 | 85/5/10 | - | - | 0.0011 | 0 | 100 | 1 | 0 |

### <Example 3>

A positive electrode active material and a battery were obtained in the same manner as in Example 1 except that, in preparing the positive electrode active material, a composite oxide represented by Ni_{0.91}Co_{0.035}Al_{0.055}O₂ was used.

### <Comparative Example 3>

A positive electrode active material and a battery were obtained in the same manner as in Comparative Example 1 except that, in preparing the positive electrode active material, a composite oxide represented by Ni_{0.91}Co_{0.035}Al_{0.055}O₂ was used.

Cycle characteristic evaluation was performed using the batteries obtained in Example 3 and Comparative Example 3. Table 3 shows the capacity retention rate of the battery of Example 3 expressed as a value relative to the capacity retention rate of the battery of Comparative Example 3, which is assumed to be 100. Further, the capacity retention rate under high voltage was also measured in the same manner as in the above-described cycle characteristic evaluation except that the voltage at the time of charging was increased from 4.2 V to 4.3 V, and the result for Example 3 is shown as a value relative to the capacity retention rate of the battery of Comparative Example 3, which is assumed to be 100.

**[Table 3]**

| | Composite Oxide (Ni/Co/ Al) | Additive | Amount Added (mol%) | S Elution Amount (mmol) | M Elution Amount (mmol) | Capacity Retention Rate | Capacity Retention Rate (4.3V) | S Elution Amount Ratio | M Elution Amount Ratio |
|---|---|---|---|---|---|---|---|---|---|
| Example 3 | 91/3.5/5.5 | Titanium Sulfate | 0.1 | 0.0124 | 0.0066 | 103 | 108 | 82 | 88 |
| Comparative Example 3 | 91/3.5/5.5 | - | - | 0.0007 | 0 | 100 | 100 | 3 | 0 |

### <Example 4>

A positive electrode active material and a battery were obtained in the same manner as in Example 1 except that, in preparing the positive electrode active material, a composite oxide represented by Ni_{0.92}Al_{0.055}Mn_{0.025}O₂ was used.

### <Comparative Example 4>

A positive electrode active material and a battery were obtained in the same manner as in Comparative Example 1 except that, in preparing the positive electrode active material, a composite oxide represented by Ni_{0.92}Al_{0.055}Mn_{0.025}O₂ was used.

Cycle characteristic evaluation was performed using the batteries obtained in Example 4 and Comparative Example 4. Table 4 shows the capacity retention rate of the battery of Example 4 expressed as a value relative to the capacity retention rate of the battery of Comparative Example 4, which is assumed to be 100.

**[Table 4]**

| | Composite Oxide (Ni/Al/Mn) | Additive | Amount Added (mol%) | S Elution Amount (mmol) | M Elution Amount (mmol) | Capacity Retention Rate | S Elution Amount Ratio | M Elution Amount Ratio |
|---|---|---|---|---|---|---|---|---|
| Example 4 | 92/5.5/2.5 | Titanium Sulfate | 0.1 | 0.0131 | 0.0069 | 106 | 80 | 91 |
| Comparative Example 4 | 92/5.5/2.5 | - | - | 0.0009 | 0 | 100 | 2 | 0 |

### <Comparative Example 5>

A positive electrode active material and a battery were obtained in the same manner as in Example 1 except that, in preparing the positive electrode active material, a composite oxide represented by Ni_{0.82}Co_{0.15}Al_{0.03}O₂ was used.

### <Comparative Example 6>

A positive electrode active material and a battery were obtained in the same manner as in Comparative Example 1 except that, in preparing the positive electrode active material, a composite oxide represented by Ni_{0.82}Co_{0.15}Al_{0.03}O₂ was used.

Cycle characteristic evaluation was performed using the batteries obtained in Comparative Examples 5 and 6. Table 5 shows the capacity retention rate of the battery of Comparative Example 5 expressed as a value relative to the capacity retention rate of the battery of Comparative Example 6, which is assumed to be 100.

**[Table 5]**

| | Composite Oxide (Ni/Co/ Al) | Additive | Amount Added (mol%) | S Elution Amount (mmol) | M Elution Amount (mmol) | Capacity Retention Rate | S Elution Amount Ratio | M Elution Amount Ratio |
|---|---|---|---|---|---|---|---|---|
| Comparative Example 5 | 82/15/3 | Titanium Sulfate | 0.1 | 0.0125 | 0.0071 | 100 | 76 | 80 |
| Comparative Example 6 | 82/15/3 | - | - | 0.0011 | 0 | 100 | 1 | 0 |

As shown in Tables 1 to 4, all of the batteries of the Examples have a higher rate of capacity retention after the cycle test and is superior in cycle characteristic as compared to the corresponding batteries of the Comparative Examples. In the batteries of Comparative Examples 1 to 4, S contained in the filtrate was less than 0.002 mmol, and the elution amount ratios of the metal element M and S were less than 50 %. When S contained in the filtrate is 0.002 mmol or more and, in addition, the elution amount ratios of the metal element M and S are 50 % or more, a high-quality positive electrode mixture layer can be formed, and the battery cycle characteristic is specifically improved.

### REFERENCE SIGNS LIST

- 10: non-aqueous electrolyte secondary battery
- 11: positive electrode
- 12: negative electrode
- 13: separator
- 14: electrode assembly
- 15: battery housing
- 16: outer can
- 17: sealing assembly
- 18, 19: insulating plate
- 20: positive electrode lead
- 21: negative electrode lead
- 22: grooved portion
- 23: bottom plate
- 24: lower valve member
- 25: insulating member
- 26: upper valve member
- 27: cap
- 28: gasket

## Claims

1. A positive electrode active material for non-aqueous electrolyte secondary battery, the positive electrode active material including a lithium transition metal composite oxide, which contains Ni in an amount of 80 mol% or more relative to a total number of moles of metal elements excluding Li, and at least one of Mn or Al, while also containing at least one metal element selected from Co, W, Mg, Mo, Nb, Ti, Si, Zr, Fe, Zn, Er, K, Pr, Ca, Ba, Sc, Rb, Ga, In, Sn, and Sr, wherein:
a total amount of Mn and Al is 5 mol% or more relative to the total number of moles of metal elements excluding Li, and
regarding a filtrate of a suspension obtained by having 250 mg of the positive electrode active material added to 10 mL of a 17.5 mass% aqueous solution of hydrochloric acid, dissolved by heating at 90 °C for 2 hours, and diluted to 50 mL, an elution amount of S in the filtrate as determined by inductively coupled plasma mass spectrometry is 0.002 mmol or more.

2. The positive electrode active material for non-aqueous electrolyte secondary battery according to claim 1, wherein the lithium transition metal composite oxide is such that an elution amount of metal element M (at least one metal element selected from Co, W, Mg, Ti, Zr, Fe, Zn, Er, K, Pr, Ca, Ba, Sc, Rb, Ga, In, Sn, and Sr) contained in the filtrate is 0.0001 mmol or more.

3. The positive electrode active material for non-aqueous electrolyte secondary battery according to claim 1 or 2, wherein, regarding a filtrate obtained by adding 1 g of the lithium transition metal composite oxide to a mixed solution of 100 mL of pure water, 1 mL of a 35 mass% aqueous solution of hydrochloric acid, 0.05 mL of 46 mass% hydrofluoric acid, and 0.05 mL of 64 mass% nitric acid, and after stirring for 5 minutes, filtering this mixed solution, respective ratios of partial elution amounts of S and metal element M contained in the filtrate as determined by inductively coupled plasma mass spectrometry to total elution amounts of S and the metal element M as determined in the same manner when 1 g of the lithium transition metal composite oxide is completely dissolved ((partial elution amount / total elution amount) × 100) are 50 % or more.

4. The positive electrode active material for non-aqueous electrolyte secondary battery according to any one of claims 1 to 3, wherein at least one of tungsten oxide or lithium tungstate is adhered to a surface of particles of the lithium transition metal composite oxide.

5. A non-aqueous electrolyte secondary battery, comprising a positive electrode including the positive electrode active material for non-aqueous electrolyte secondary battery according to any one of claims 1 to 4, a negative electrode, and a non-aqueous electrolyte.

6. A method for producing the positive electrode active material for non-aqueous electrolyte secondary battery according to any one of claims 1 to 4, comprising:
a step of obtaining a composite oxide by performing oxidizing roasting of a hydroxide obtained by a crystallization method and containing at least Ni;
a step of obtaining a lithium transition metal composite oxide by mixing this composite oxide with a lithium compound and firing the mixed particles; and
a step of washing the lithium transition metal composite oxide with water, then mixing this composite oxide with at least one selected from cobalt sulfate, magnesium sulfate, titanium sulfate, zirconium sulfate, iron sulfate, zinc sulfate, erbium sulfate, potassium sulfate, praseodymium sulfate, calcium sulfate, barium sulfate, scandium sulfate, rubidium sulfate, gallium sulfate, indium sulfate, tin sulfate, and strontium sulfate, and heat-treating this mixture at a temperature of 150 to 280 °C in a vacuum condition.
